# EUROPÄISCHE PATENTANMELDUNG

(11) **EP 4 826 342 A1**
(43) Veröffentlichungstag der Anmeldung: **21.10.2026**
(21) Anmeldenummer: 26171851.4
(22) Anmeldetag: 13.04.2026
(51) Int. Cl.: G01K 1/14, G01K 13/02

(54) **TEMPERATURSENSORVORRICHTUNG MIT STÜTZSTRUKTUR**

(30) Priorität: 14.04.2025 US 202563788341 P
(71) Anmelder: WIKA Alexander Wiegand SE & Co. KG, 63911 Klingenberg/Main (DE)
(72) Erfinder: Staab, Ulrich, 63599 Biebergemünd (DE); Kressbach, Jens, 60528 Frankfurt (DE); Tier, Michael, Pearland, 77584 (US)
(74) Vertreter: Liedtke & Partner Patentanwälte

(57) **Zusammenfassung**

Die Erfindung betrifft eine Temperatursensorvorrichtung, umfassend
- einen ersten Temperatursensor (1100) mit mindestens einem temperatursensitiven Sensorelement (1104) und
- ein Anschlussteil (1200) mit einer Eingangsseite (1201) und einer der Eingangsseite (1201) gegenüberliegenden Prozessseite (1202), sowie mit einem ersten Durchgangskanal (1203), welcher sich von der Eingangsseite (1201) zur Prozessseite (1202) erstreckt, wobei
- der erste Temperatursensor (1100) durch den ersten Durchgangskanal (1203) hindurchgeführt angeordnet ist und zumindest an der Prozessseite (1202) mittelbar oder unmittelbar in den ersten Durchgangskanal (1203) eingeschweißt oder eingelötet ist. Erfindungsgemäß ist eine Stützstruktur (1300) vorhanden, welche mittelbar oder unmittelbar mit dem Anschlussteil (1200) mechanisch starr verbunden oder verbindbar ist und
eine erste Halterung (1310) aufweist, welche den ersten Temperatursensor (1100) in einem ersten Abstand (L1) vom Anschlussteil (1200) zumindest abschnittsweise lateral umgreift, umschließt oder umrandet.

## Beschreibung

### TECHNISCHES GEBIET

Die vorliegende Erfindung betrifft das technische Gebiet der Temperaturmesstechnik, insbesondere der Temperatursensorvorrichtungen zur Temperaturmessung in industriellen Prozessanlagen, für strömende Prozessmedien oder in Reaktoren.

Temperatursensorvorrichtungen sind in einer Vielzahl von industriellen Anwendungen weit verbreitet, in denen die Temperatur eines flüssigen, gasförmigen, granularen oder auch festen Mediums gemessen oder überwacht werden soll. Im Folgenden wird diese Vielfalt von Anwendungen zusammengefasst ausgedrückt durch die Begriffe Prozesskammer und Prozessrohrleitung. Dabei sind mit "Prozesskammer" solche Behältnisse oder Anlagen gemeint, in denen ein Medium gelagert, bevorratet oder auch verarbeitet wird. Insbesondere können mit Prozesskammer also Hochöfen und jegliche Art von Druckbehältern und Reaktoren gemeint sein. Mit "Prozessrohrleitung" sind hingegen solche Anlagen und Strukturen gemeint, in welchen ein Medium gefördert, gepumpt oder transportiert wird.

Temperatursensorvorrichtungen, die dem Oberbegriff der vorliegenden Erfindung entsprechen, umfassen typischerweise mindestens einen Temperatursensor sowie ein einteiliges oder mehrteiliges Anschlussteil, durch welches der Temperatursensor oder die Temperatursensoren mechanisch an einen Prozessanschluss an einer jeweiligen, sogenannten Messstelle an einer Prozesskammer oder Prozessrohrleitung angeschlossen wird beziehungsweise werden. Das Anschlussteil dient dabei insbesondere dem Zweck, den Prozessanschluss mediendicht abzuschließen, sodass das Medium aus der Prozesskammer oder der Prozessrohrleitung nicht durch den Prozessanschluss austreten kann. Ein bekanntes Problem bei derartigen Vorrichtungen besteht darin, dass die Temperatursensoren mechanischen Belastungen ausgesetzt sind, die zu Beschädigungen und Undichtigkeiten führen können.

Die mechanischen Belastungen, denen die Temperatursensoren ausgesetzt sind, können aus verschiedenen Faktoren resultieren. Bei Temperatursensoren, die ein Schutzrohr aufweisen, entstehen diese Belastungen häufig dadurch, dass das Schutzrohr in ein strömendes Medium hineinragt, insbesondere in einer Prozessrohrleitung. Die Strömung des Mediums kann zu Schwingungen und mechanischen Spannungen führen, die auf Schweiß- oder Lötverbindungen zwischen dem Schutzrohr des Temperatursensors und dem Anschlussteil einwirken. Bei Temperatursensoren, die als mineralisolierte Mantelleitungen ausgeführt und ohne zusätzliches Schutzrohr beispielsweise in eine Prozesskammer (zum Beispiel in einen Reaktor) eingeführt werden, können auch ohne Strömung des Mediums in der Prozesskammer zusätzliche mechanische Spannungen auftreten, wenn die Mantelleitungen innerhalb der Prozesskammer an bestimmte Positionen hin verlegt und dabei gebogen werden. Diese mechanischen Biegespannungen können die Integrität der Schweiß- oder Lötverbindungen beeinträchtigen und letztlich zu Undichtigkeiten führen.

### AUFGABE DER ERFINDUNG

Es ist daher die Aufgabe der Erfindung, eine Temperatursensorvorrichtung bereitzustellen, die eine verbesserte mechanische Stabilität aufweist und die genannten Probleme der mechanischen Belastungen und der daraus resultierenden Undichtigkeiten überwindet.

Diese Aufgabe wird gelöst durch eine Temperatursensorvorrichtung, welche die im Anspruch 1 angegebenen Merkmale aufweist. Vorteilhafte Ausgestaltungen und Weiterbildungen der Erfindung sind Gegenstand der abhängigen Ansprüche.

### ZUSAMMENFASSUNG DER ERFINDUNG

Die erfindungsgemäße Temperatursensorvorrichtung weist einen - insbesondere mindestens einen - ersten Temperatursensor mit mindestens einem temperatursensitiven Sensorelement sowie ein Anschlussteil mit einer Eingangsseite und einer der Eingangsseite gegenüberliegenden Prozessseite auf.

Im Kontext dieser Erfindung bedeutet die Angabe, dass die Temperatursensorvorrichtung oder eines ihrer Teile oder eine ihrer Funktionseinheiten "mindestens eine" Instanz einer bestimmten Funktionseinheit (z. B. "mindestens ein temperatursensitives Sensorelement", "mindestens ein weiterer Temperatursensor") aufweist, dass die Temperatursensorvorrichtung oder das jeweilige Teil oder die jeweilige Funktionseinheit auch mehrere Instanzen dieser bestimmten Funktionseinheit umfassen kann, jedoch nicht muss. "Mindestens ein weiterer Temperatursensor" schließt beispielsweise zwei oder mehrere weitere Temperatursensoren mit ein, aber eben auch nur einen einzigen weiteren Temperatursensor.

Wenn nach der Einführung von "mindestens einer" Instanz einer bestimmten Funktionseinheit in darauffolgenden Abschnitten von "einer jeden" Instanz dieser Funktionseinheit oder auch von "allen" Instanzen dieser Funktionseinheit gesprochen wird (beispielsweise "ein jeder weiterer Temperatursensor" oder "alle weiteren Temperatursensoren"), ist dann jeweils die Gesamtheit aller gegebenenfalls vorhandenen Instanzen (mindestens eine, jedoch möglicherweise auch zwei oder mehrere) der jeweiligen Funktionseinheit gemeint und es werden durch diese Formulierungen keine neuen Funktionseinheiten eingeführt. Diese Formulierungen werden im Folgenden insbesondere dann verwendet, wenn die Temperatursensorvorrichtung mehrere Instanzen einer bestimmten Funktionseinheit aufweist und eine bestimmte Ausführung dabei für jede dieser Instanzen gleichermaßen gelten soll.

Der erste Temperatursensor kann allgemein eine längliche Form aufweisen, mit einem distalen Ende und einem proximalen Ende. Eine laterale Ausdehnung des Temperatursensors ist dabei geringer, beispielsweise um mindestens eine Größenordnung geringer, als seine longitudinale Ausdehnung. In der Nähe des distalen Endes oder beispielsweise direkt am distalen Ende ist das mindestens eine Sensorelement angeordnet. In exemplarischen Ausgestaltungen können weitere Sensorelemente jeweils in Abständen entlang der longitudinalen Ausdehnung des Temperatursensors vorgesehen sein, sodass mit einem solchen Temperatursensor an mehreren Stellen entlang seiner länglichen Ausdehnung gleichzeitig eine Temperatur gemessen werden kann.

Ein jedes temperatursensitives Sensorelement kann beispielsweise als Thermoelement oder als Widerstandsthermometer (beispielsweise als Platin-Widerstand) ausgebildet sein. Exemplarisch kann der erste Temperatursensor mehrere Sensorelemente einer Art umfassen oder auch eine Kombination verschiedener Arten von Sensorelementen.

Das Anschlussteil ist dazu eingerichtet, an einer Messstelle mittelbar oder unmittelbar an einen Prozessanschluss eines Prozessbehälters oder einer Prozessrohrleitung angeschlossen zu werden. Dabei wird der Prozessanschluss mittelbar oder unmittelbar durch das Anschlussteil mediendicht verschlossen und das Anschlussteil wird so ausgerichtet, dass die Prozessseite dem Prozessanschluss sowie dem Inneren der Prozesskammer oder Prozessrohrleitung zugewandt ist, während die Eingangsseite entsprechend vom Prozessanschluss abgewandt ausgerichtet und somit einer die Prozesskammer oder die Prozessrohrleitung umgebenden Umgebung zugewandt ist.

Das Anschlussteil weist einen ersten Durchgangskanal auf, welcher sich von der Eingangsseite zur Prozessseite erstreckt. Der erste Temperatursensor ist durch den ersten Durchgangskanal hindurchgeführt angeordnet, sodass das distale Ende des ersten Temperatursensors in die Prozesskammer oder die Prozessrohrleitung eindringt, wenn das Anschlussteil an einen Prozessanschluss angeschlossen wird. Der erste Temperatursensor ist dabei zumindest an der Prozessseite mittelbar oder unmittelbar in den ersten Durchgangskanal eingeschweißt oder eingelötet. Dadurch wird der erste Durchgangskanal mit dem hindurchgeführten Temperatursensor und der Schweiß- oder Lötverbindung mediendicht verschlossen. Angeschlossen an eine Prozesskammer beziehungsweise Prozessrohrleitung wirkt das Anschlussteil somit als Barriere, welche ein sich in der Prozesskammer befindliches oder in der Prozessrohrleitung gefördertes Prozessmedium an einem Austreten hindert.

Weiterhin umfasst die Temperatursensorvorrichtung eine Stützstruktur, welche mittelbar oder unmittelbar mit dem Anschlussteil mechanisch starr verbunden oder verbindbar ist. Die Stützstruktur weist eine erste Halterung auf, welche den ersten Temperatursensor in einem ersten Abstand vom Anschlussteil zumindest abschnittsweise lateral umgreift, umschließt oder umrandet.

Im Kontext der vorliegenden Erfindung bedeutet "unmittelbar", dass die jeweils genannten Teile oder Funktionseinheiten beziehungsweise deren Instanzen direkt miteinander die dabei genannte Wechselwirkung oder Verknüpfung eingehen, wohingegen "mittelbar" bedeutet, dass die genannte Wechselwirkung oder Verknüpfung erst mittels weiterer Teile, Funktionseinheiten oder deren Instanzen zustande kommt beziehungsweise durch solche vermittelt wird.

Beispielsweise ist einer der Temperatursensoren unmittelbar an der Prozessseite in den Durchgangskanal eingeschweißt oder eingelötet, wenn die Schweiß- oder Lötverbindung direkt zwischen einem Körper des Temperatursensors und einem Rand des Durchgangskanals erfolgt. Erfolgt die Schweiß- oder Lötverbindung hingegen nicht direkt, sondern etwa unter Verwendung einer Hülse, die über den Temperatursensor gezogen ist, wobei eine erste Schweiß- oder Lötverbindung beispielsweise zwischen dem Rand des Durchgangskanals und einer Außenfläche Hülse und eine weiter Schweiß- oder Lötverbindung zwischen einem Rand der Hülse und dem Temperatursensor vorgesehen ist, entspricht dies einer mittelbaren Einschweißung oder Einlötung.

Weiterhin bedeutet "verbunden" im Kontext der vorliegenden Erfindung, dass die jeweils genannten Teile, Funktionseinheiten oder deren Instanzen aneinander befestigt sind, wobei die jeweilige Verbindung nicht zerstörungs- oder beschädigungsfrei lösbar ausgestaltet ist. Eine solche Verbindung ist beispielsweise dadurch zu erreichen, dass die genannten Teile, Funktionseinheiten oder deren Instanzen miteinander verschweißt oder verlötet werden, aus einem Stück gefertigt oder integral als ein Formteil hergestellt werden, etwa durch Gießen oder additive Fertigung. Ist hingegen vorgesehen, dass die genannten Teile, Funktionseinheiten oder deren Instanzen zerstörungs- oder beschädigungsfrei lösbar aneinander zu befestigen sind, wird dies im Kontext der vorliegenden Erfindung als "verbindbar" bezeichnet. Eine derartige Verbindbarkeit wir beispielsweise dadurch erreicht, dass die jeweils genannten Teile über Vorkehrungen verfügen, die ein Verschrauben, Verrasten oder Klemmen der Teile aneinander beziehungsweise miteinander ermöglichen.

Dass die erste Halterung den ersten Temperatursensor "zumindest abschnittsweise lateral" umgreift, umschließt oder umrandet, bedeutet im Kontext dieser Erfindung, dass der erste Temperatursensor seitlich entlang mindestens eines Segments seines Umfangs durch die erste Halterung in seiner Auslenkungsfähigkeit in entsprechender Richtung begrenzt wird.

In exemplarischen Ausgestaltungen erfolgt diese Begrenzung vollumfänglich. In anderen exemplarischen Ausgestaltungen kann jedoch auch entlang eines oder mehrerer Umfangssegmente die Begrenzung unterbrochen sein, wobei dann eine Breite jener Umfangssegmente geringer als ein Durchmesser des ersten Temperatursensors gewählt sein kann, sodass der erste Temperatursensor nicht aus der ersten Halterung ausbrechen kann. In diesen exemplarischen Ausgestaltungen kann eine Begrenzung der Auslenkungsfähigkeit des ersten Temperatursensors in beliebigen seitlichen Richtungen wirksam erzielt werden.

Zum Zweck einer entsprechenden Begrenzung kann beispielsweise vorgesehen sein, dass sich der erste Temperatursensor und die erste Halterung dauerhaft berühren, also jeweils aneinander anliegen, wobei insbesondere ein Formschluss oder Kraftschluss vorliegen kann. Insbesondere kann vorgesehen sein, dass der erste Temperatursensor in der ersten Halterung eingeklemmt ist. Dadurch kann die Auslenkungsfähigkeit des ersten Temperatursensors besonders wirksam eingeschränkt werden und die Stützstruktur stabilisiert den ersten Temperatursensor in vorteilhafter Weise.

In einem anderen möglichen Beispiel kann - in einem Ausgangszustand, in dem der erste Temperatursensor gerade ausgerichtet ist und keine äußeren Kräfte seitlich auf ihn einwirken - ein definierter Abstand beziehungsweise ein definiertes Spiel zwischen dem ersten Temperatursensor und der ersten Halterung vorgesehen sein. Dadurch wird eine Montage der Temperatursensorvorrichtung deutlich erleichtert, während die Begrenzung der Auslenkungsfähigkeit des ersten Temperatursensors immer noch in hinreichendem Maße erzielt werden kann.

Durch die Stützstruktur kann effektiv erreicht werden, dass mechanische Spannungen im Bereich der Schweiß- oder Lötverbindung zwischen dem ersten Temperatursensor und dem Anschlussteil, welche durch lateral auf den ersten Temperatursensor einwirkende Kräfte oder durch ein Biegen des Temperatursensors hervorgerufen werden können, drastisch reduziert werden. Somit können Beschädigungen an diesen Stellen und dadurch hervorgerufene Undichtigkeiten des Anschlussteils verhindert werden. Der erste Durchgangskanal bleibt zuverlässig durch die Einschweißung oder Einlötung des ersten Temperatursensors versiegelt. Dadurch ist die Temperatursensorvorrichtung besonders zuverlässig und weist ein deutlich reduziertes Ausfallrisiko auf.

Der erste Abstand kann beispielsweise mindestens dem Dreifachen des Durchmessers des ersten Temperatursensors entsprechen, beispielsweise mindestens dem Vierfachen des Durchmessers. Durch eine entsprechende Auslegung können die im Vorangegangenen genannten Wirkungen und Vorteile der Stützstruktur besonders effektiv erreicht werden, während zugleich eine kompakte Bauform eingehalten werden kann.

In einer exemplarischen Ausgestaltung der Temperatursensorvorrichtung umfasst der erste Temperatursensor ein Schutzrohr und einen in einer Bohrung oder in einem Rohrkanal des Schutzrohrs angeordneten Messeinsatz. Der Messeinsatz umfasst dabei das mindestens eine temperatursensitive Sensorelement.

Schutzrohre werden, wie bereits erwähnt, häufig verwendet, wenn die Temperatur in strömenden Medien gemessen werden soll. Durch den häufig massiv ausgebildeten Körper des Schutzrohrs kann der Messeinsatz zuverlässig vor strömungsbedingten mechanischen, aber auch vor chemischen und sonstigen Belastungen geschützt werden.

Dennoch kann es in bestimmten Situationen oder nach längeren Verwendungszeiten zu Beschädigungen der Verbindung zwischen Schutzrohr und Anschlussteil kommen, insbesondere wenn die Temperatursensorvorrichtung durch vom Schutzrohr in der Strömung hervorgerufene Verwirbelungen und dadurch am Schutzrohr induzierte Schwingungen stark belastet wird. Solche Belastungen können entscheidend durch die Stützstruktur reduziert werden, da diese am Schutzrohr auftretende Kräfte wirksam aufnehmen und entstehende Schwingungen dämpfen oder eliminieren kann. Somit kann die Zuverlässigkeit gesteigert und das Ausfallrisiko minimiert werden.

In einer weiteren exemplarischen Ausgestaltung der Temperatursensorvorrichtung ist der erste Temperatursensor als mineralisolierte Mantelleitung ausgebildet. Das bedeutet, dass der erste Temperatursensor einen dünnwandigen Mantel aufweist, welcher eine mineralische Isolierung einschließt. Innerhalb der mineralischen Isolierung ist das mindestens eine Sensorelement eingebettet. Der Mantel ist beispielsweise aus einem Edelstahl gefertigt. Somit wird ein jedes Sensorelement des ersten Temperatursensors effektiv vor chemischen und mechanischen Beeinträchtigungen durch Prozessmedien geschützt. Gleichzeitig ist der erste Temperatursensor biegbar und kann zum Beispiel innerhalb einer Prozesskammer beliebig ausgerichtet, verlegt, an spezifische Messpunkte herangeführt und dort befestigt werden.

Wie im Vorangehenden bereits erwähnt, kann in solchen Ausgestaltungen durch die Stützstruktur wirksam erzielt werden, dass durch das Biegen beziehungsweise Verlegen des ersten Temperatursensors hervorgerufene mechanische Spannungen im Bereich der Einschweißung oder Einlötung am Anschlussteil deutlich reduziert oder sogar eliminiert werden, da die Stützstruktur ein Auslenken des ersten Temperatursensors verhindert oder stark einschränkt und dabei auftretenden Kräfte aufnimmt beziehungsweise abfängt. Somit kann die Zuverlässigkeit gesteigert und das Ausfallrisiko minimiert werden.

In einer weiteren exemplarischen Ausgestaltung der Temperatursensorvorrichtung erfolgt das zumindest abschnittsweise laterale Umgreifen des ersten Temperatursensors durch die erste Halterung entlang eines longitudinalen Haltebereichs. Dieser longitudinale Haltebereich weist dabei eine Länge auf, welche größer als ein Durchmesser des ersten Temperatursensors ist, beispielsweise größer als das Doppelte des Durchmessers des ersten Temperatursensors ist.

Durch einen somit longitudinal ausgedehnten Haltebereich können mechanische Spannungen im Bereich der (mittelbaren oder unmittelbaren) Einschweißung oder Einlötung des ersten Temperatursensors am Anschlussteil noch weiter reduziert werden. In Ausgestaltungen, in denen die erste Halterung den ersten Temperatursensor dagegen nur entlang eines sehr kurzen Haltebereichs umgreift oder quasi nur an einem Punkt umgreift, kann die erste Halterung wie eine Hebelachse wirken, sodass die Einschweißung oder Einlötung nicht vollständig entlastet wird. Durch das Umgreifen entlang des ausgedehnten longitudinalen Haltebereichs kann eine solche Hebelwirkung unterbunden oder zumindest stark reduziert werden, sodass die Einschweißung oder Einlötung am ersten Durchgangskanal des Anschlussteils wirksam von mechanischen Kräften und Spannungen, die auf den ersten Temperatursensor jenseits der Stützstruktur einwirken, entkoppelt wird.

In einer weiteren exemplarischen Ausgestaltung der Temperatursensorvorrichtung wird der erste Temperatursensor durch das zumindest abschnittsweise laterale Umgreifen durch die erste Halterung derart in seiner Auslenkungsfähigkeit beschränkt, dass ein Querschnittsmittelpunkt des ersten Temperatursensors im ersten Abstand vom Anschlussteil stets zumindest im Wesentlichen auf einer gedachten Verlängerung einer Achse des Durchgangskanals liegt.

Dass der Querschnittsmittelpunkt "im Wesentlichen" auf der gedachten Verlängerung der Achse des ersten Durchgangskanals liegt, bedeutet, dass der erste Temperatursensor in seiner Auslenkungsfähigkeit durch die jeweilige Halterung derart eingeschränkt wird, dass der Querschnittsmittelpunkt zu jeder Zeit maximal um einen Durchmesser des ersten Temperatursensors von dieser Achse entfernt liegen kann. Beispielsweise wird der erste Temperatursensor in seiner Auslenkungsfähigkeit sogar so eingeschränkt, dass sein Querschnittsmittelpunkt zu jeder Zeit maximal um 10 Prozent seines Durchmessers von dieser Achse entfernt liegen kann. In diesem Kontext ist ein Querschnitt durch den ersten Temperatursensor zu betrachten, welcher unter dem ersten Abstand vom Anschlussteil senkrecht zu einer longitudinalen Ausdehnung des ersten Temperatursensors liegt.

Durch diese Ausgestaltung wird der erste Temperatursensor durch die Stützstruktur in einer solchen Auslenkung umgriffen und gehalten, dass durch die Stützstruktur selbst keine oder nur sehr geringe mechanische Spannungen im Bereich der Einschweißung oder Einlötung des ersten Temperatursensors am ersten Durchgangskanal hervorgerufen werden. Der erste Temperatursensor wird also durch die Stützstruktur nicht oder nur sehr geringfügig vorgespannt oder vorgebogen. Die Temperatursensorvorrichtung kann somit besonders zuverlässig und ausfallsicher ausgeführt werden. Außerdem kann die Temperatursensorvorrichtung in dieser Ausgestaltung besonders einfach montiert werden, da der erste Temperatursensor im Wesentlichen in einer geraden Linie durch den ersten Durchgangskanal hindurch an die erste Halterung herangeführt werden kann.

In einer weiteren exemplarischen Ausgestaltung der Temperatursensorvorrichtung weist die erste Halterung eine erste Halteplatte mit einem ersten Halterungskanal auf. Das laterale Umgreifen des ersten Temperatursensors durch die erste Halterung kommt hierbei dadurch zustande, dass der erste Temperatursensor durch den ersten Halterungskanal hindurchgeführt angeordnet ist.

Die Stützstruktur kann in dieser Ausgestaltung besonders einfach und kostengünstig hergestellt werden und es ist nur eine geringe Anzahl an Bauteilen notwendig, um die Temperatursensorvorrichtung aufzubauen.

Der erste Halterungskanal kann dabei beispielsweise koaxial oder konzentrisch zum ersten Durchgangskanal des Anschlussteils liegen. Dadurch wird eine Montage - konkret ein Hindurchfädeln oder Hindurchführen des ersten Temperatursensors - erleichtert und die Stützstruktur übt keine oder nur sehr geringe mechanische Spannungen über den ersten Temperatursensor auf dessen Einschweißung oder Einlötung am Anschlussteil aus.

Dabei kann der erste Halterungskanal einen Durchmesser aufweisen, welcher um 3 Prozent bis 15 Prozent größer als ein Durchmesser des ersten Temperatursensors ist. Alternativ kann der erste Halterungskanal im Radius mit einem Spiel von 0,1 mm bis 0,5 mm gegenüber einem Radius des ersten Temperatursensors versehen sein. Das heißt, das Spiel ist zwischen einer Mantelfläche des ersten Temperatursensors und einer eine freie Öffnung des ersten Halterungskanals begrenzenden Fläche ausgebildet. Durch eine derartige Ausführung lässt sich die Temperatursensorvorrichtung leicht montieren, da der erste Temperatursensor leichtgängig in den ersten Halterungskanal eingeführt werden kann. Gleichzeitig lässt sich durch diese Toleranzen eine effektive Einschränkung der Auslenkungsfähigkeit des ersten Temperatursensors erzielen.

In einer weiteren exemplarischen Ausgestaltung der Temperatursensorvorrichtung umfasst die erste Halterung eine Klemmvorrichtung. Das zumindest abschnittsweise laterale Umgreifen des ersten Temperatursensors durch die erste Halterung kommt in dieser Ausgestaltung dadurch zustande, dass der erste Temperatursensor durch die Klemmvorrichtung lösbar gegen die erste Halterung geklemmt oder gepresst wird oder durch die Klemmvorrichtung eingeklemmt oder geklammert wird.

Diese Ausgestaltung realisiert das bereits im Vorangegangenen besprochene Merkmal eines dauerhaften Sich-Berührens des ersten Temperatursensors und der ersten Halterung, wodurch eine besonders wirksame Begrenzung der Auslenkbarkeit des ersten Temperatursensors erzielt werden kann. Außerdem kann eine derart ausgestaltete Stützstruktur besonders einfach montiert werden oder sogar an einer bestehenden Temperatursensorvorrichtung, welche bislang keine Stützstruktur umfasste, nachgerüstet werden.

Für diesen Zweck kann die erste Halterung beispielsweise einen Grundhalter aufweisen, welcher beispielsweise zentral angeordnet ist, wobei der erste Temperatursensor seitlich am Grundhalter vorbeigeführt wird. Nachdem der Grundhalter mit dem Anschlussteil mittelbar oder unmittelbar mechanisch starr verbunden ist, können Klemmbacken seitlich über den Temperatursensor gesteckt und an die Grundhalterung angeschraubt werden, so dass der Temperatursensor wirksam durch die Halterung zumindest abschnittsweise lateral umgriffen wird.

In einer weiteren exemplarischen Ausgestaltung der Temperatursensorvorrichtung umfasst die Stützstruktur eine zweite Halterung.

Die zweite Halterung ist - ebenso wie die erste Halterung - mittelbar oder unmittelbar mit dem Anschlussteil mechanisch starr verbunden oder verbindbar. Weiterhin umgreift die zweite Halterung den ersten Temperatursensor in einem zweiten Abstand von der ersten Halterung zumindest abschnittsweise lateral.

Die im Kontext der ersten Halterung zur Formulierung "abschnittsweise lateral umgreifen" und zur Ausgestaltung der Begrenzung der Auslenkungsfähigkeit des ersten Temperatursensors getroffenen Ausführungen gelten entsprechend auch für die zweite Halterung.

In dieser Ausgestaltung können mechanische Spannungen im Bereich der (mittelbaren oder unmittelbaren) Einschweißung oder Einlötung des ersten Temperatursensors am Anschlussteil noch weiter reduziert werden. In Ausgestaltungen, die nur die erste Halterung aufweisen, kann die erste Halterung (wie im Vorangegangenen bereits erläutert) als Hebelachse wirken, so dass die Einschweißung oder Einlötung nicht vollständig entlastet wird. Dies ist insbesondere dann der Fall, wenn die erste Halterung den ersten Temperatursensor nicht entlang eines longitudinal ausgedehnten Haltebereichs umgreift, sondern nur punktuell oder entlang eines sehr kurzen Haltebereichs. Durch die zweite Halterung wird eine solche Hebelwirkung unterbunden und die Einschweißung oder Einlötung am ersten Durchgangskanal des Anschlussteils kann wirksam von mechanischen Kräften und Spannungen, die auf den ersten Temperatursensor jenseits der Stützstruktur einwirken, entkoppelt werden.

Der zweite Abstand zwischen der ersten und der zweiten Halterung kann beispielsweise mindestens einem Durchmesser des ersten Temperatursensors entsprechen, beispielsweise mindestens dem Zweifachen des Durchmessers. Durch eine entsprechende Auslegung können die im Vorangegangenen genannten Wirkungen und Vorteile der Stützstruktur besonders effektiv erreicht werden, während zugleich eine kompakte Bauform eingehalten werden kann.

In einer weiteren exemplarischen Ausgestaltung der Temperatursensorvorrichtung, welche die zweite Halterung umfasst, ist eine der Halterungen nur mittelbar mechanisch starr mit dem Anschlussteil verbunden oder verbindbar. Diese mittelbare Verbindung kommt dadurch zustande, dass die jeweilige Halterung mit einer anderen Halterung mittelbar oder unmittelbar mechanisch starr verbunden oder verbindbar ist, wobei die jeweilige andere Halterung mit dem Anschlussteil mittelbar oder unmittelbar mechanisch starr verbunden oder verbindbar ist.

So kann beispielsweise die zweite Halterung nur mittelbar mit dem Anschlussteil mechanisch starr verbunden oder verbindbar sein, wobei diese mittelbare Verbindung dadurch zustande kommt, dass die zweite Halterung mit der ersten Halterung mittelbar oder unmittelbar mechanisch starr verbunden oder verbindbar ist. Ebenso kann die erste Halterung nur mittelbar mit dem Anschlussteil mechanisch starr verbunden oder verbindbar sein, wobei diese mittelbare Verbindung wiederum dadurch zustande kommt, dass die erste Halterung mit der zweiten Halterung mittelbar oder unmittelbar mechanisch starr verbunden oder verbindbar ist.

Diese Ausgestaltung ermöglicht, dass die erste Halterung und die zweite Halterung miteinander vormontiert werden können, um dann anschließend in einem einzigen Schritt mit dem Anschlussteil verbunden zu werden. Durch diese Modularität kann die Montage der Temperatursensorvorrichtung erheblich erleichtert werden.

In einer weiteren exemplarischen Ausgestaltung der Temperatursensorvorrichtung wird der erste Temperatursensor durch das zumindest abschnittsweise laterale Umgreifen durch die zweite Halterung derart in seiner Auslenkungsfähigkeit beschränkt, dass ein Querschnittsmittelpunkt des ersten Temperatursensors im zweiten Abstand von der ersten Halterung stets zumindest im Wesentlichen auf einer gedachten Verlängerung einer Achse des Durchgangskanals liegt.

Dass der Querschnittsmittelpunkt "im Wesentlichen" auf der gedachten Verlängerung der Achse des ersten Durchgangskanals liegt, gilt entsprechend, was zu dieser Formulierung im Vorangegangenen erläutert wurde.

Durch diese Ausgestaltung wird der erste Temperatursensor auch durch die zweite Halterung der Stützstruktur in einer solchen Auslenkung umgriffen und gehalten, so dass durch die Stützstruktur selbst keine oder nur sehr geringe mechanische Spannungen im Bereich der Einschweißung oder Einlötung des ersten Temperatursensors am ersten Durchgangskanal hervorgerufen werden. Der erste Temperatursensor wird also durch die Stützstruktur nicht oder nur sehr geringfügig vorgespannt oder vorgebogen. Die Temperatursensorvorrichtung kann somit besonders zuverlässig und ausfallsicher ausgeführt werden. Außerdem kann die Temperatursensorvorrichtung in dieser Ausgestaltung besonders einfach montiert werden, da der erste Temperatursensor zumindest im Wesentlichen in einer geraden Linie durch den ersten Durchgangskanal hindurch an die zweite Halterung herangeführt werden kann.

In einer weiteren exemplarischen Ausgestaltung der Temperatursensorvorrichtung weist die zweite Halterung eine zweite Halteplatte mit einem zweiten Halterungskanal auf. Das laterale Umgreifen des ersten Temperatursensors durch die zweite Halterung kommt hierbei dadurch zustande, dass der erste Temperatursensor durch den zweiten Halterungskanal hindurchgeführt angeordnet ist.

Die Stützstruktur kann in dieser Ausgestaltung besonders einfach und kostengünstig hergestellt werden und es ist nur eine geringe Anzahl an Bauteilen notwendig, um die Temperatursensorvorrichtung aufzubauen.

Der zweite Halterungskanal kann dabei beispielsweise koaxial oder konzentrisch zum ersten Durchgangskanal des Anschlussteils liegen. Dadurch wird eine Montage - konkret ein Hindurchfädeln oder Hindurchführen des ersten Temperatursensors - erleichtert und die Stützstruktur übt keine oder nur sehr geringe mechanische Spannungen über den ersten Temperatursensor auf dessen Einschweißung oder Einlötung am Anschlussteil aus.

Dabei kann der zweite Halterungskanal einen Durchmesser aufweisen, welcher um 3 Prozent bis 15 Prozent größer als ein Durchmesser des ersten Temperatursensors ist. Alternativ kann der zweite Halterungskanal im Radius mit einem Spiel von 0,1 mm bis 0,5 mm gegenüber einem Radius des ersten Temperatursensors versehen sein. Das heißt, das Spiel ist zwischen einer Mantelfläche des ersten Temperatursensors und einer eine freie Öffnung des zweiten Halterungskanals begrenzenden Fläche ausgebildet. Durch eine derartige Ausführung lässt sich die Temperatursensorvorrichtung leicht montieren, da der mindestens eine Temperatursensor leichtgängig in den zweiten Halterungskanal eingeführt werden kann. Gleichzeitig lässt sich durch diese Toleranzen eine effektive Einschränkung der Auslenkungsfähigkeit des ersten Temperatursensors erzielen.

In einer weiteren exemplarischen Ausgestaltung der Temperatursensorvorrichtung umfasst die zweite Halterung sowohl die zweite Halteplatte aus der vorangegangenen exemplarischen Ausgestaltung als auch eine Verbindungswand, welche sich zumindest abschnittsweise lateral an die zweite Halteplatte anschließt. Dabei ist die zweite Halteplatte mittelbar oder unmittelbar über die Verbindungswand mit dem Anschlussteil mechanisch starr verbindbar oder verbunden. Die erste Halterung ist zwischen dem Anschlussteil und der zweiten Halteplatte angeordnet und zumindest abschnittsweise lateral von der Verbindungswand umgeben. Durch diese Ausgestaltung kann die Temperatursensorvorrichtung besonders kompakt und stabil aufgebaut werden und benötigt zugleich eine sehr geringe Anzahl an Bauteilen.

Die zweite Halterung kann dabei beispielsweise die Form eines Topfes aufweisen, sodass sich die Verbindungswand vollumfänglich lateral an die zweite Halteplatte anschließt. Dabei wird die zweite Halterung so angeordnet, dass das von der Verbindungswand umrahmte Innere der Topfform in Richtung des Anschlussteils zeigt. Die erste Halterung ist innerhalb der Topfform angeordnet, zum Beispiel in diese hineingeschoben, und kann dabei selbst die zuvor beschriebene erste Halteplatte aufweisen.

In einer weiteren exemplarischen Ausgestaltung der Temperatursensorvorrichtung umfasst diese mindestens einen weiteren Temperatursensor. Das Anschlussteil weist zugleich mindestens einen weiteren Durchgangskanal auf, sodass einem jeden weiteren Temperatursensor genau einer der weiteren Durchgangskanäle zugeordnet ist. Die Anzahl der weiteren Durchgangskanäle entspricht also mindestens der Anzahl der weiteren Temperatursensoren. Ein jeder weiterer Temperatursensor ist durch den jeweiligen, ihm zugeordneten weiteren Durchgangskanal hindurchgeführt angeordnet und zumindest an der Prozessseite mittelbar oder unmittelbar in den jeweiligen, ihm zugeordneten weiteren Durchgangskanal eingeschweißt oder eingelötet. Die erste Halterung umgreift einen jeden weiteren Temperatursensor im ersten Abstand vom Anschlussteil zumindest abschnittsweise lateral, ebenso wie den ersten Temperatursensor.

Diese Ausgestaltung kennzeichnet somit, dass die Temperatursensorvorrichtung mindestens zwei Temperatursensoren umfasst (den ersten und den mindestens einen weiteren Temperatursensor), anstatt nur einen einzigen Temperatursensor (den ersten Temperatursensor), wobei alle Temperatursensoren von der Stützstruktur jeweils zumindest abschnittsweise lateral umgriffen werden. Dadurch können mit einer einzigen derartigen Temperatursensorvorrichtung über einen einzigen Prozessanschluss mehrere Temperatursensoren zur Anwendung kommen, wodurch die Temperatursensorvorrichtung vielseitiger einsetzbar ist. Gleichzeitig können die Vorteile, welche durch die Stützstruktur erzielt werden können, effektiv an jedem Temperatursensor zum Tragen kommen.

Jeder weitere Temperatursensor sowie der erste Temperatursensor können in dieser Ausgestaltung beispielsweise jeweils als mineralisolierte Mantelleitung ausgebildet sein.

Allgemein kann diese Ausgestaltung in vorteilhafter Weise mit allen vorangehend genannten exemplarischen Ausgestaltungen kombiniert werden. Was in einer jeweiligen exemplarischen Ausgestaltung jeweils im Hinblick auf den ersten Temperatursensor erläutert wurde, kann entsprechend auf jeden der weiteren Temperatursensoren übertragen werden.

Der Offenbarungsgehalt dieser Schrift ist nicht auf die Merkmale der vorangehend genannten exemplarischen Ausführungsformen und/oder Weiterbildungen beschränkt, sondern umfasst auch beliebige Kombinationen dieser Merkmale, insofern sie sich nicht logisch gegenseitig ausschließen.

### KURZBESCHREIBUNG DER ZEICHNUNGEN

Im Folgenden werden exemplarische Ausgestaltungen der Erfindung anhand von Figuren näher erläutert.

Dabei zeigen:
- Figuren 1A-1C: verschiedene exemplarische Temperatursensorvorrichtung gemäß dem Stand der Technik schematisch im Querschnitt,
- Figuren 2A-2D: verschiedene exemplarische Ausgestaltungen einer Temperatursensorvorrichtung schematisch im Querschnitt,
- Figuren 3A-3C: verschiedene exemplarische Ausgestaltungen einer Temperatursensorvorrichtung schematisch im Querschnitt,
- Figur 4: eine exemplarische Ausgestaltung einer Temperatursensorvorrichtung in einer perspektivischen Darstellung,
- Figur 5: eine exemplarische Ausgestaltung einer Temperatursensorvorrichtung in einer perspektivischen Darstellung,
- Figur 6: die exemplarische Ausgestaltung aus Figur 2A im darin eingezeichneten Querschnitt VI und
- Figur 7: eine exemplarische Ausgestaltung eines Temperatursensors schematisch im Querschnitt.

Einander entsprechende Teile sind in allen Figuren mit den gleichen Bezugszeichen versehen.

### DETAILBESCHREIBUNG DER ZEICHNUNGEN

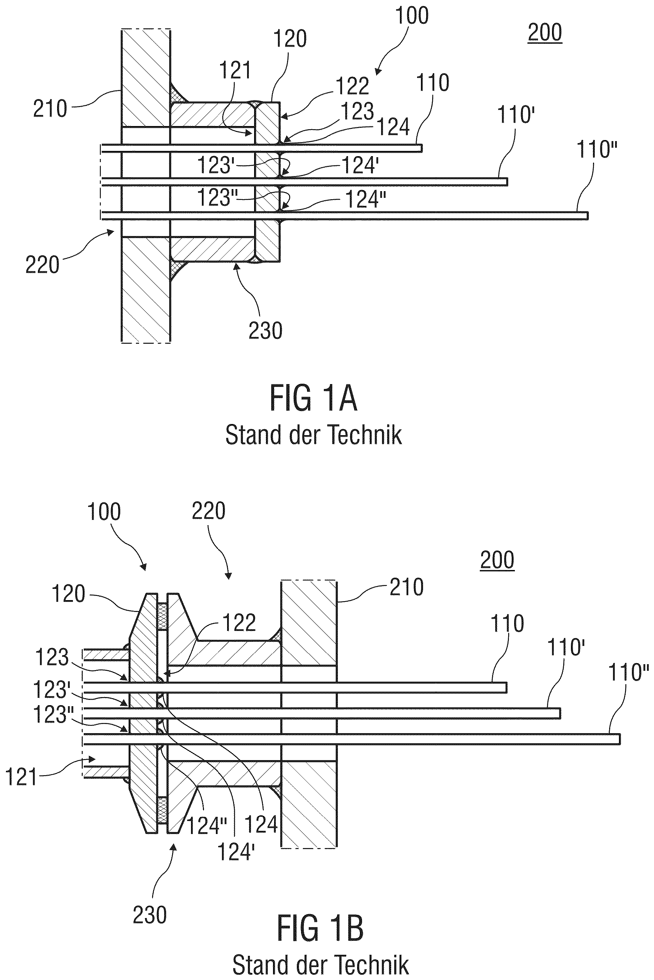

In den Figuren 1A bis 1C sind drei verschiedene exemplarische Ausgestaltungen von Temperatursensorvorrichtungen 100 gemäß dem Stand der Technik jeweils schematisch in einem Querschnitt dargestellt.

In allen drei Figuren 1A-1C ist die jeweilige Temperatursensorvorrichtung 100 an einem Prozessanschluss 230 einer Messstelle 220 an einer Prozesskammer oder Prozessrohrleitung 200 angeschlossen dargestellt. Von der jeweiligen Prozesskammer oder Prozessrohrleitung 200 ist dabei jeweils nur abschnittsweise eine Wandung 210 dargestellt, wobei in den Figuren 1A-1C jeweils rechts von der Wandung 210 ein Innenraum der jeweiligen Prozesskammer oder Prozessrohrleitung 200 liegt, in welchem durch die Temperatursensorvorrichtung 100 eine Temperaturmessung vorgenommen werden soll.

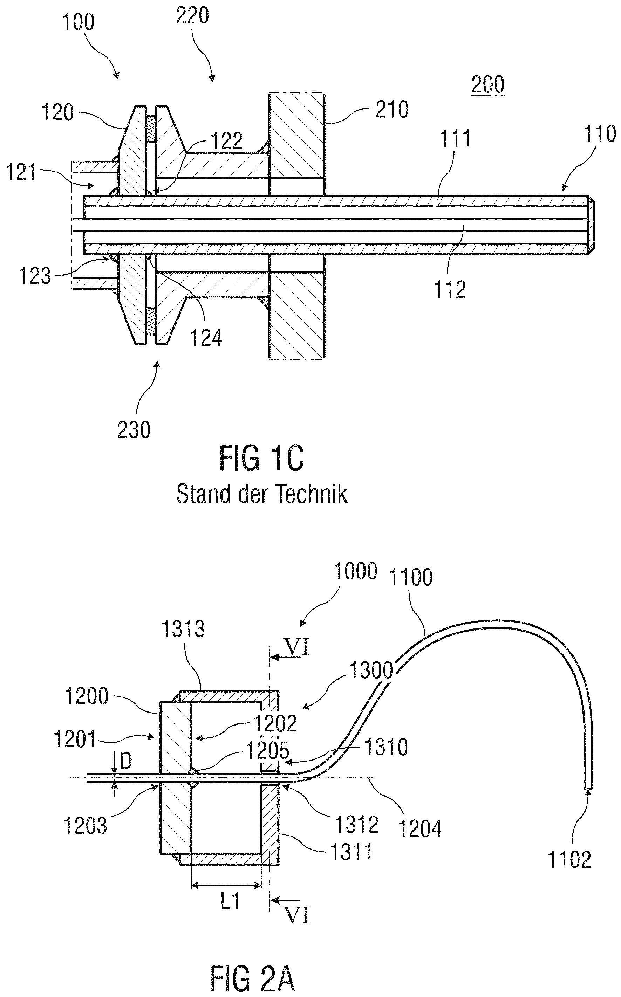

Die Figuren 1A und 1B zeigen dabei Ausgestaltungen, welche insgesamt drei Temperatursensoren 110, 110', 110" umfassen, nämlich jeweils einen ersten Temperatursensor 110 sowie jeweils zwei weitere Temperatursensoren 110', 110". Diese sind als mineralisolierte Mantelleitung ausgebildet. Figur 1C zeigt hingegen eine Ausgestaltung mit einem einzigen Temperatursensor 110, welcher ein Schutzrohr 111 aufweist. Innerhalb der Schutzrohrs 111 ist ein Messeinsatz 112 aufgenommen.

In allen drei Figuren 1A-1C wird der jeweilige Prozessanschluss 230 durch ein Anschlussteil 120 verschlossen, sodass ein Medium (nicht dargestellt) aus dem Inneren der Prozesskammer oder Prozessrohrleitung 200 nicht durch den Prozessanschluss 230 austreten kann. In den Figuren 1B und 1C umfasst der Prozessanschluss 230 dabei jeweils ein Halsrohr, an dessen Ende eine Flanschgeometrie vorgesehen ist. Das Anschlussteil 120 ist in diesen Beispielen entsprechend in Form eines entsprechenden Flansches ausgebildet. In Figur 1A hingegen umfasst der Prozessanschluss 230 ein in das Innere der Prozesskammer oder Prozessrohrleitung 200 hineinragenden Schweißstutzen, an welchen das Anschlussteil 120 angeschweißt ist. Das Anschlussteil 120 ist dabei in Form einer Platte oder Scheibe ausgebildet.

Die Anschlussteile 120 aus den Figuren 1A und 1B weisen jeweils insgesamt drei Durchgangskanäle 123, 123', 123" auf, nämlich jeweils einen ersten Durchgangskanal 123, sowie zwei weitere Durchgangskanäle 123', 123". Das Anschlussteil 120 aus Figur 1C weist hingegen nur einen ersten Durchgangskanal 123 auf. Die jeweiligen Temperatursensoren 110, 110', 110" sind in allen drei Figuren 1A-1C jeweils durch einen der Durchgangskanäle 123, 123', 123" von einer Eingangsseite 121 des Anschlussteils 120 hin zu einer Prozessseite 122 durchgeschoben, sodass sie in die Prozesskammer oder Prozessrohrleitung 200 hineinragen. Auf der jeweiligen Prozessseite 122 der Anschlussteile 120 sind die Temperatursensoren 110, 110', 110" jeweils durch Schweißverbindungen oder Lötverbindungen 124, 124', 124" mit dem jeweiligen Anschlussteil 120 verbunden, wobei dieses dabei abgedichtet wird.

Durch mechanische Kräfte, die beispielsweise durch ein in einer Prozessrohrleitung 200 strömendes Medium auf zumindest einen der Temperatursensoren 110, 110', 110" ausgeübt werden, oder die beispielsweise dadurch entstehen, dass zumindest ein Temperatursensor 110, 110', 110" innerhalb der Prozesskammer oder Prozessrohrleitung 200 gebogen wird, um an einen speziellen Messpunkt herangeführt zu werden, können mechanische Spannungen am Ort dieser Schweiß- oder Lötverbindungen 124, 124', 124" entstehen. Diese können dadurch beschädigt werden, wodurch das Anschlussteil 120 undicht wird und ein Medium aus dem Inneren der Prozesskammer oder Prozessrohrleitung 200 durch einen der Durchgangskanäle 123, 123', 123" austreten kann.

Die vorliegende Erfindung begegnet diesem Problem, indem sie eine Stützstruktur 1300 vorsieht, welche zumindest einen Temperatursensor 1100, 1100', 1100" abstützt, Kräfte aufnimmt und Schweiß- oder Lötverbindungen 1205, 1205', 1205" somit von mechanischen Spannungen entkoppelt oder solche zumindest drastisch reduziert. Exemplarische Ausgestaltungen einer erfindungsgemäßen Temperatursensorvorrichtung 1000 sind in den Figuren 2A-2D, 3A-3C und 4-7 dargestellt.

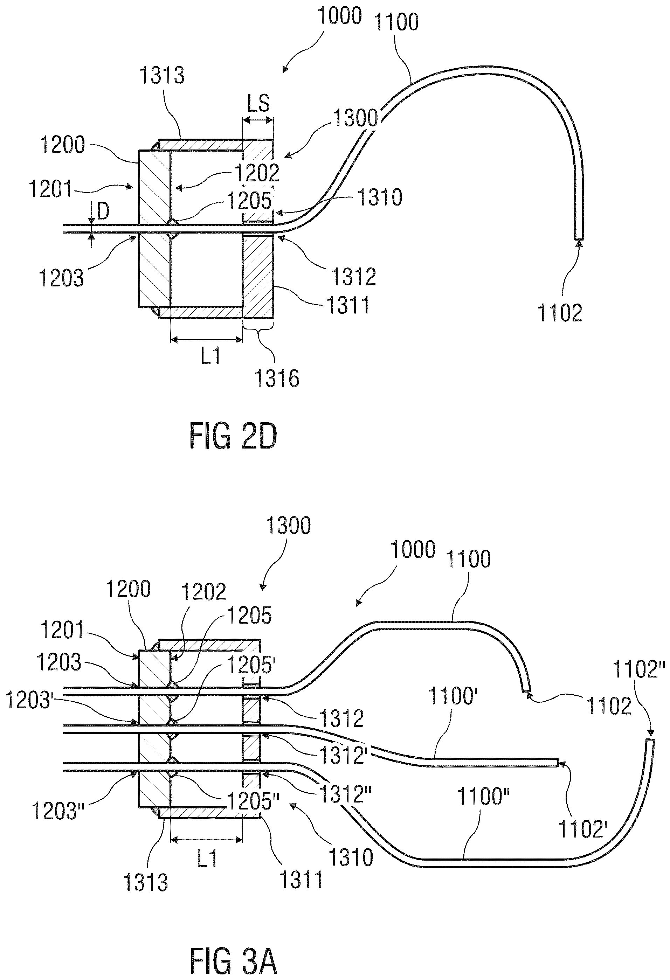

Die Figuren 2A-2D sowie 3A-3C stellen exemplarische Ausgestaltungen einer Temperatursensorvorrichtung 1000 mit einer Stützstruktur 1300 dar. Jede der Ausgestaltungen umfasst dabei ein Anschlussteil 1200, welches ähnlich zu der Variante des Anschlussteils 120 aus Figur 1A ausgebildet ist. Alternative Ausgestaltungen des Anschlussteils 1200, ähnlich zu den Anschlussteilen 120 aus den Figuren 1B und 1C, sind aber ebenso möglich.

Mindestens ein erster Temperatursensor 1100 ist jeweils von einer Eingangsseite 1201 durch einen ersten Durchgangskanal 1203 zu einer Prozessseite 1202 des jeweiligen Anschlussteils 1200 hindurchgeführt, sodass ein distales Ende 1102 des Temperatursensors 1100 über die Ebene der Prozessseite 1202 hinausragt und der Temperatursensor 1100 in eine Prozesskammer oder Prozessrohrleitung eindringen kann, wenn das Anschlussteil 1200 an einen entsprechenden Prozessanschluss angeschlossen wird. Der erste Temperatursensor 1100 ist jeweils durch eine Schweiß- oder Lötverbindung 1205 an der Prozessseite 1202 des Anschlussteils 1200 umlaufend mit dem Rand des ersten Durchgangskanals 1203 dichtend verbunden, in anderen Worten eingeschweißt oder eingelötet.

Während die Figuren 2A-2D jeweils nur einen einzigen Temperatursensor 1100 umfassen, weisen die Ausgestaltungen in den Figuren 3A-3C jeweils insgesamt drei Temperatursensoren 1100, 1100', 1100" auf, nämlich jeweils den ersten Temperatursensor 1100 sowie jeweils zwei weitere Temperatursensoren 1100', 1100". Analog zum ersten Temperatursensor 1100 sind die weiteren Temperatursensoren 1100', 1100" jeweils von der Eingangsseite 1201 durch ihnen jeweils zugeordnete weitere Durchgangskanäle 1203', 1203" zur Prozessseite 1202 des jeweiligen Anschlussteils 1200 hindurchgeführt, sodass distale Enden 1102', 1102" der weiteren Temperatursensoren 1100', 1100" über die Ebene der Prozessseite 1202 hinausragen und sie in eine Prozesskammer oder Prozessrohrleitung eindringen können, wenn das Anschlussteil 1200 an einen entsprechenden Prozessanschluss angeschlossen wird. Die weiteren Temperatursensoren 1100', 1100" sind ebenso jeweils durch Schweiß- oder Lötverbindungen 1205', 1205" an der Prozessseite 1202 des Anschlussteils 1200 umlaufend mit dem Rand des ihnen jeweils zugeordneten weiteren Durchgangskanals 1203', 1203" dichtend verbunden, in anderen Worten eingeschweißt oder eingelötet.

Die Figuren 2A, 2D und 3A haben gemein, dass die jeweils dargestellte Stützstruktur 1300 eine erste Halterung 1310 aufweist, welche eine erste Halteplatte 1311 umfasst, die um einen ersten Abstand L1 vom Anschlussteil 1200 beabstandet ist. In der ersten Halteplatte 1311 ist eine Anzahl an ersten Halterungskanälen 1312, 1312', 1312" vorgesehen, welche der Anzahl an im jeweiligen Beispiel vorhandenen Temperatursensoren 1100, 1100', 1100" entspricht.

Die ersten Halterungskanäle 1312, 1312', 1312" sind dabei in ihrem Durchmesser so bemessen, dass sich die Temperatursensoren 1100, 1100', 1100" leichtgängig durch sie hindurchschieben lassen, sie gleichzeitig aber die Auslenkungsfähigkeit der Temperatursensoren 1100, 1100', 1100" wirksam in alle seitlichen Richtungen begrenzen.

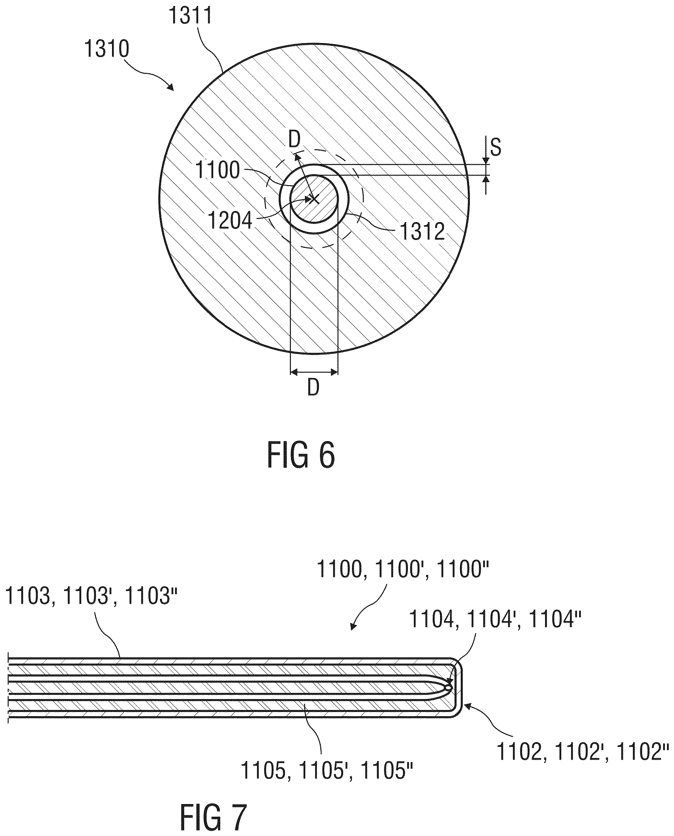

Wie in Figur 6 zu sehen ist, welche den in Figur 2A eingezeichneten Querschnitt durch die Ebene VI darstellt, kann dies dadurch erreicht werden, dass der erste Halterungskanal 1312 im Radius ein Spiel S gegenüber dem Radius des ersten Temperatursensors 1100 aufweist. Das heißt, das Spiel S ist zwischen einer Mantelfläche des ersten Temperatursensors 1100 und einer eine freie Öffnung des ersten Halterungskanals 1312 begrenzenden Fläche ausgebildet. Dieses Spiel S kann beispielsweise 0,1 mm bis 0,5 mm betragen oder ein Durchmesser des ersten Halterungskanals 1312 ist um 3 bis 15 Prozent größer als ein Durchmesser D des ersten Temperatursensors 1100. Entsprechendes gilt für die weiteren ersten Halterungskanäle 1312', 1312".

Wie bereits ausgeführt, wird durch die Halterung des ersten Temperatursensors 1100 im ersten Halterungskanal 1312 bzw. durch das zumindest abschnittsweise laterale Umgreifen des ersten Temperatursensors 1100 durch die erste Halterung 1310 erreicht, dass der erste Temperatursensor 1100 derart in seiner Auslenkungsfähigkeit beschränkt wird, dass der Querschnittsmittelpunkt des ersten Temperatursensors 1100 zumindest im Wesentlichen auf der gedachten Verlängerung der Achse 1204 des ersten Durchgangskanals 1203 liegt. Hierunter ist zu verstehen, dass der erste Temperatursensor 1100 in seiner Auslenkungsfähigkeit durch die jeweilige Halterung 1310 derart eingeschränkt wird, dass der Querschnittsmittelpunkt zu jeder Zeit maximal um den Durchmesser D des ersten Temperatursensors 1100 von dieser Achse 1204 entfernt liegen kann. Dies ist in Figur 6 mittels der gestrichelten Linie dargestellt. Beispielsweise wird der erste Temperatursensor 1100 in seiner Auslenkungsfähigkeit sogar so eingeschränkt, dass sein Querschnittsmittelpunkt zu jeder Zeit maximal um 10 Prozent seines Durchmessers D von dieser Achse 1204 entfernt liegen kann. In diesem Kontext ist ein Querschnitt durch den ersten Temperatursensor 1100 zu betrachten, welcher unter dem ersten Abstand L1 vom Anschlussteil 1200 senkrecht zu einer longitudinalen Ausdehnung des ersten Temperatursensors 1100 liegt.

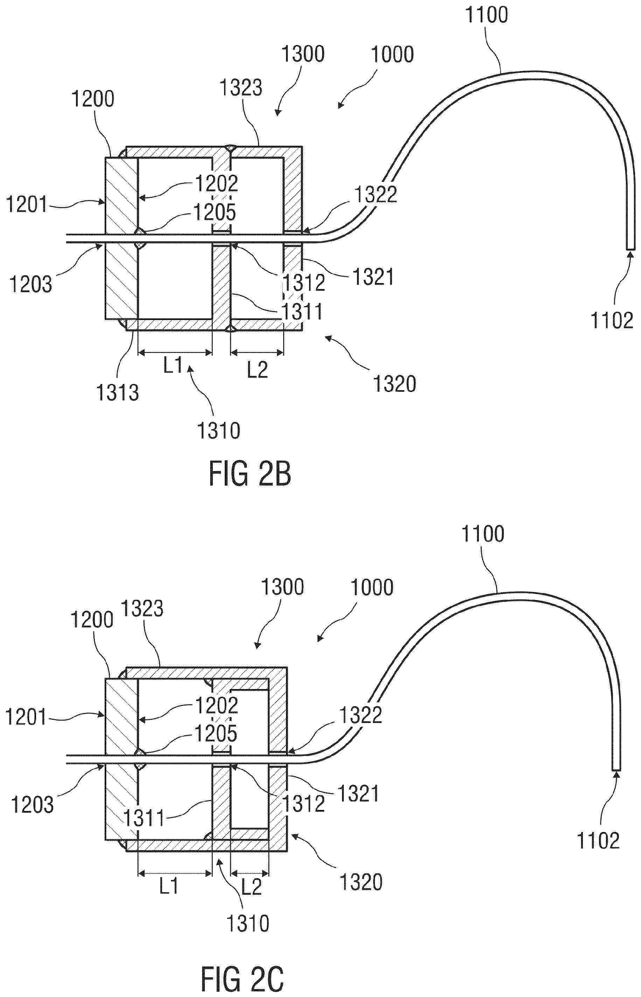

Weiterhin sind die ersten Halterungskanäle 1312, 1312', 1312" so positioniert, dass sie im Wesentlichen auf einer gedachten Verlängerung einer Achse 1204 (siehe Fig. 6 und exemplarisch auch Fig. 2A; auf die Einzeichnung entsprechender Achsen wurde in den Figuren 2B-2D und 3A-3C zugunsten der Übersichtlichkeit verzichtet) durch den jeweils zugeordneten Durchgangskanal 1203, 1203', 1203" liegen. Insbesondere sind zusammengehörige Durchgangskanäle 1203, 1203', 1203" und erste Halterungskanäle 1312, 1312', 1312" jeweils koaxial bzw. konzentrisch angeordnet. Dadurch kann die erste Halterung 1310 leicht auf die Temperatursensoren 1100, 1100', 1100" aufgeschoben werden und ruft keine mechanischen Spannungen an den Schweiß- oder Lötverbindungen 1205, 1205', 1205" hervor, da die Temperatursensoren 1100, 1100', 1100" vom Anschlussteil 1200 aus durch die Stützstruktur 1300 hindurch gerade verlaufen und nicht gebogen werden.

Die erste Halteplatte 1311 ist jeweils durch eine erste Verbindungswand 1313 mit dem Anschlussteil 1200 verbunden oder verbindbar. In den Figuren 2A, 2D und 3A ist diese Verbindung jeweils unmittelbar dargestellt, da die erste Verbindungswand 1313 direkt an das Anschlussteil 1200 geschweißt ist. Eine mittelbare Verbindung wäre ebenso möglich. Die erste Verbindungswand 1313 kann sich dabei an die erste Halteplatte 1311 vollumfänglich lateral anschließen, sodass die erste Halterung 1310 eine Topfform ausbildet. Dadurch kann eine besonders hohe mechanische Stabilität erreicht werden.

Die in Figur 2D dargestellte exemplarische Ausgestaltung unterscheidet sich von jener aus der Figur 2A dadurch, dass die erste Halteplatte 1311 eine größere Dicke aufweist. Dadurch ergibt sich, dass der erste Temperatursensor 1100 durch die erste Halterung 1300 entlang eines longitudinalen Haltebereichs 1316 zumindest abschnittsweise laterale umgriffen, umschlossen oder umrandet wird, der länger ist als jener in Figur 2A. Dabei entspricht eine Länge LS des longitudinale Haltebereichs 1316 in dem Beispiel aus Figur 2D mindestens dem Durchmessers D des ersten Temperatursensors 1100, beispielsweise sogar mindestens dem Doppelten des Durchmessers D. Durch die Verwendung eines derart longitudinal ausgedehnten Haltebereichs 1316 kann die Schweiß- oder Lötverbindung 1205 besonders wirksam von mechanischen Belastungen entkoppelt werden, da eine Hebelwirkung an der ersten Halterung 1310 wirksam unterbunden oder zumindest drastisch reduziert wird. Dies ist insbesondere in solchen Ausgestaltungen hilfreich, deren Stützstruktur 1300 einzig die ersten Halterung 1310 umfasst, also insbesondere keine zweite Halterung 1320 aufweist.

In den Figuren 2A-2C, 3A-3C, 4 und 5 wurde zugunsten der Übersichtlichkeit auf die Verwendung der Bezugszeichen 1316 und LS verzichtet. Offensichtlich lassen sich jedoch für jede der dargestellten exemplarischen Ausgestaltungen entsprechende Haltebereiche und Längen identifizieren.

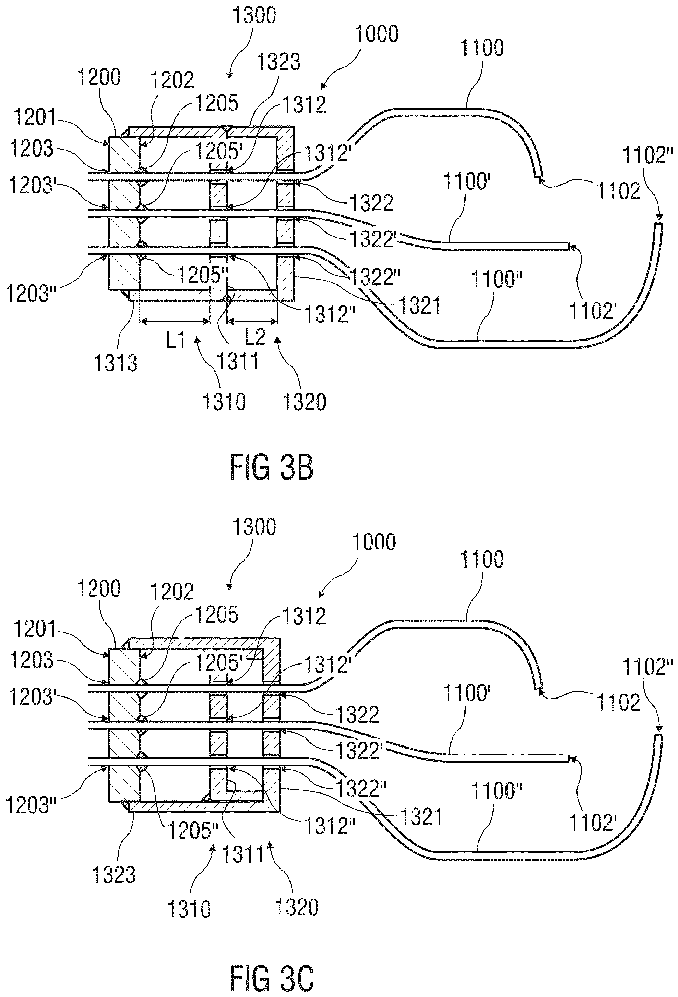

Die Figuren 2B, 3B, 2C und 3C haben gemein, dass die jeweils dargestellte Stützstruktur 1300 zusätzlich zu einer ersten Halterung 1310 auch noch eine zweite Halterung 1320 aufweist. Die jeweilige zweite Halterung 1320 umfasst jeweils eine zweite Halteplatte 1321, welche um einen zweiten Abstand L2 von der jeweiligen ersten Halterung 1310 beabstandet ist. In der jeweiligen zweiten Halteplatte 1321 ist jeweils eine Anzahl an zweiten Halterungskanälen 1322, 1322', 1322" vorgesehen, welche der Anzahl an im jeweiligen Beispiel vorhandenen Temperatursensoren 1100, 1100', 1100" entspricht.

Die jeweiligen zweiten Halterungskanäle 1322, 1322', 1322" sind jeweils so angeordnet, dass sie zumindest im Wesentlichen auf einer gedachten Verlängerung einer Achse 1204 (siehe Fig. 6) durch den jeweils zugeordneten Durchgangskanal 1203, 1203', 1203" liegen. Insbesondere sind zusammengehörige Durchgangskanäle 1203, 1203', 1203" und zweite Halterungskanäle 1322, 1322', 1322" jeweils koaxial bzw. konzentrisch angeordnet. Dadurch kann die zweite Halterung 1320 leicht auf die Temperatursensoren 1100, 1100', 1100" aufgeschoben werden und ruft keine mechanischen Spannungen an den Schweiß- oder Lötverbindungen 1205, 1205', 1205" hervor, da die Temperatursensoren 1100, 1100', 1100" vom Anschlussteil 1200 aus durch die Stützstruktur 1300 hindurch gerade verlaufen und nicht gebogen werden.

Bezüglich der Durchmesser der zweiten Halterungskanäle 1322, 1322', 1322" gilt entsprechend, was im Vorangegangenen im Kontext der ersten Durchgangskanäle 1312, 1312', 1312" erläutert wurde.

Die zweite Halterung 1320 weist jeweils eine zweite Verbindungswand 1323 auf. In den Figuren 2B und 3B ist die jeweilige zweite Halterung 1320 durch ihre Verbindungswand 1323 jeweils mit der ersten Halterung 1310 verbunden, welche wiederum mit dem Anschlussteil 1200 verbunden ist. Somit ist die zweite Halterung 1320 in diesen Figuren jeweils nur mittelbar mit dem Anschlussteil 1200 verbunden. In den Figuren 2C und 3C hingegen ist die zweite Halterung 1320 über die jeweilige zweite Verbindungswand 1323 unmittelbar mit dem Anschlussteil 1200 verbunden, während die erste Halterung 1310 dazwischen angeordnet und nur mittelbar - über die zweite Halterung 1320 - mit dem Anschlussteil 1200 verbunden ist.

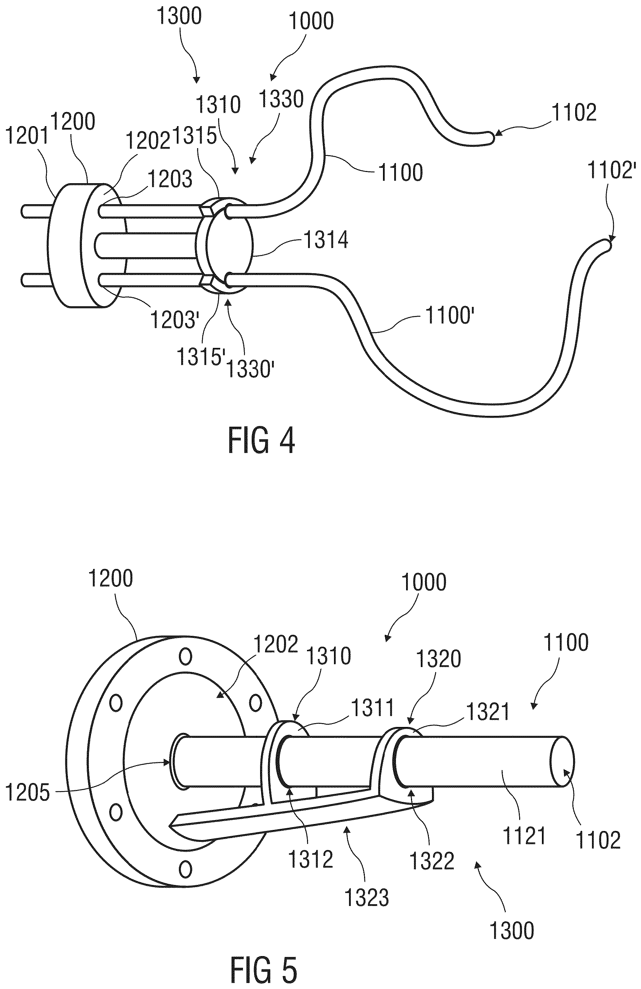

In Figur 4 ist eine exemplarische Ausgestaltung der Temperatursensorvorrichtung 1000 in einer perspektivischen Ansicht dargestellt. Die Temperatursensorvorrichtung 1000 umfasst in diesem Beispiel einen ersten Temperatursensor 1100 und einen weiteren Temperatursensor 1100'. Die Stützstruktur 1300 umfasst hier zwei Klemmvorrichtungen 1330, 1330', um beide Temperatursensoren 1100, 1100' gegen die Stützstruktur 1300 zu klemmen. Hierfür weist die Stützstruktur 1300 einen Grundhalter 1314 auf, sowie zwei Klemmbacken 1315, 1315', welche gegen den Grundhalter 1314 geschraubt werden können und dabei jeweils einen Temperatursensor 1100, 1100' einklemmen.

In Figur 5 ist eine weitere exemplarische Ausgestaltung der Temperatursensorvorrichtung 1000 in einer perspektivischen Ansicht dargestellt. Hierbei umfasst der erste Temperatursensor 1100 ein Schutzrohr 1121, ähnelt im Aufbau also der aus dem Stand der Technik bekannten Temperatursensorvorrichtung 100 aus Figur 1C.

Die Stützstruktur 1300 umfasst in diesem Beispiel eine erste Halterung 1310 und eine zweite Halterung 1320, welche jeweils eine erste Halteplatte 1311 mit einem ersten Halterungskanal 1312, respektive eine zweite Halteplatte 1321 mit einem zweiten Halterungskanal 1322 aufweisen. Eine Verbindungswand 1323 verbindet beide Halteplatten 1311, 1321 mechanisch starr mit dem Anschlussteil 1200. Dadurch ist die Stützstruktur 1300 in der Lage, mechanische Belastungen, wie seitlich am

Schutzrohr 1121 angreifende Kräfte oder Schwingungen desselben, wirksam abzufangen oder zu dämpfen, sodass mechanische Spannungen und Belastungen der Schweiß- oder Lötverbindung 1205 reduziert oder sogar ganz verhindert werden.

Die in den Figuren 2A-2D, 3A-3C, 4 und 6 dargestellten ersten Temperatursensoren 1100 und/oder weiteren Temperatursensoren 1100', 1100" können in exemplarischen Ausgestaltungen als mineralisolierte Mantelleitungen ausgebildet sein. Eine solche ist in Figur 7 schematisch im Querschnitt dargestellt. Ein metallischer, dünnwandiger Mantel 1103, 1103', 1103" umschließt dabei eine mineralische Isolation 1105, 1105', 1105". Innerhalb der Isolation 1105, 1105', 1105" ist ein oder sind mehrere Sensorelemente 1104, 1104', 1104" angeordnet.

Die Erfindung ist nicht auf die vorhergehenden ausführlichen Ausführungsbeispiele beschränkt. Sie kann in dem Umfang der nachfolgenden Ansprüche modifiziert werden. Ebenso können einzelne Aspekte aus den Unteransprüchen miteinander kombiniert werden, insofern sie sich nicht logisch ausschließen.

### BEZUGSZEICHENLISTE

| | |
|---|---|
| 100 | Temperatursensorvorrichtung |
| 110, 110', 110" | Temperatursensor |
| 111 | Schutzrohr |
| 112 | Messeinsatz |
| 120 | Anschlussteil |
| 121 | Eingangsseite |
| 122 | Prozessseite |
| 123, 123', 123" | Durchgangskanal |
| 124, 124', 124" | Schweiß- oder Lötverbindung |
| 200 | Prozesskammer / Prozessrohrleitung |
| 210 | Wandung |
| 220 | Messstelle |
| 230 | Prozessanschluss |
| | |
| 1000 | Temperatursensorvorrichtung |
| 1100 | Erster Temperatursensor |
| 1100', 1100" | Weiterer Temperatursensor |
| 1102, 1102', 1102" | Distales Ende |
| 1103, 1103', 1103" | Mantel |
| 1104, 1104', 1104" | Sensorelement |
| 1105, 1105', 1105" | Isolation |
| 1121 | Schutzrohr |
| 1200 | Anschlussteil |
| 1201 | Eingangsseite |
| 1202 | Prozessseite |
| 1203 | Erster Durchgangskanal |
| 1203', 1203" | Weiterer Durchgangskanal |
| 1204 | Achse |
| 1205, 1205', 1205" | Schweiß- oder Lötverbindung |
| 1300 | Stützstruktur |
| 1310 | Erste Halterung |
| 1311 | Erste Halteplatte |
| 1312, 1312', 1312" | Erster Halterungskanal |
| 1313 | Verbindungswand |
| 1314 | Grundhalter |
| 1315, 1315' | Klemmbacke |
| 1316 | Longitudinaler Haltebereich |
| 1320 | Zweite Halterung |
| 1321 | Zweite Halteplatte |
| 1322, 1322', 1322" | Zweiter Halterungskanal |
| 1323 | Verbindungswand |
| 1330, 1330' | Klemmvorrichtung |
| | |
| L1 | Erster Abstand |
| L2 | Zweiter Abstand |
| LS | Länge des longitudinalen Haltebereichs |
| D | Durchmesser |
| S | Spiel |

## Patentansprüche

1. Temperatursensorvorrichtung (1000) umfassend
- einen ersten Temperatursensor (1100) mit mindestens einem temperatursensitiven Sensorelement (1104) und
- ein Anschlussteil (1200) mit einer Eingangsseite (1201) und einer der Eingangsseite (1201) gegenüberliegenden Prozessseite (1202), sowie mit einem ersten Durchgangskanal (1203), welcher sich von der Eingangsseite (1201) zur Prozessseite (1202) erstreckt, wobei
- der erste Temperatursensor (1100) durch den ersten Durchgangskanal (1203) hindurchgeführt angeordnet ist und zumindest an der Prozessseite (1202) mittelbar oder unmittelbar in den ersten Durchgangskanal (1203) eingeschweißt oder eingelötet ist,
**gekennzeichnet durch**
eine Stützstruktur (1300), welche mittelbar oder unmittelbar mit dem Anschlussteil (1200) mechanisch starr verbunden oder verbindbar ist und
eine erste Halterung (1310) aufweist, welche den ersten Temperatursensor (1100) in einem ersten Abstand (L1) vom Anschlussteil (1200) zumindest abschnittsweise lateral umgreift, umschließt oder umrandet.

2. Temperatursensorvorrichtung (1000) nach Anspruch 1, wobei der erste Temperatursensor (1100) als mineralisolierte Mantelleitung ausgebildet ist oder der erste Temperatursensor (1100) ein Schutzrohr (1121) mit einem Messeinsatz umfasst.

3. Temperatursensorvorrichtung (1000) nach einem der vorangegangenen Ansprüche, wobei der erste Abstand (L1) mindestens dem Dreifachen eines Durchmessers (D) des ersten Temperatursensors (1100) entspricht, insbesondere mindestens dem Vierfachen des Durchmessers (D) des ersten Temperatursensors (1100) entspricht.

4. Temperatursensorvorrichtung (1000) nach einem der vorangegangenen Ansprüche, wobei das zumindest abschnittsweise laterale Umgreifen, Umschließen oder Umranden des ersten Temperatursensors (1100) durch die erste Halterung (1310) entlang eines longitudinalen Haltebereichs (1316) erfolgt, wobei der longitudinale Haltebereich (1316) eine Länge (LS) aufweist, welche größer als ein Durchmesser (D) des ersten Temperatursensors (1100) ist, insbesondere größer als das Doppelte des Durchmessers (D) des ersten Temperatursensors (1100) ist.

5. Temperatursensorvorrichtung (1000) nach einem der vorangegangenen Ansprüche, wobei der erste Temperatursensor (1100) durch das zumindest abschnittsweise laterale Umgreifen, Umschließen oder Umranden durch die erste Halterung (1310) derart in seiner Auslenkungsfähigkeit beschränkt ist, dass ein Querschnittsmittelpunkt des ersten Temperatursensors (1100) im ersten Abstand (L1) vom Anschlussteil (1200) stets zumindest im Wesentlichen auf einer gedachten Verlängerung einer Achse (1204) des ersten Durchgangskanals (1203) liegt.

6. Temperatursensorvorrichtung (1000) nach einem der vorangegangenen Ansprüche, wobei die erste Halterung (1310) eine erste Halteplatte (1311) mit einem ersten Halterungskanal (1312) aufweist, wobei der erste Temperatursensor (1100) durch den ersten Halterungskanal (1312) hindurchgeführt angeordnet ist.

7. Temperatursensorvorrichtung (1000) nach Anspruch 6, wobei der erste Halterungskanal (1312) einen Durchmesser aufweist, welcher jeweils um 3 Prozent bis 15 Prozent größer als ein Durchmesser (D) des ersten Temperatursensors (1100) ist und/oder
wobei der Halterungskanal (1312) im Radius ein Spiel (S) von 0,1 mm bis 0,5 mm gegenüber einem Radius des ersten Temperatursensors (1100) aufweist.

8. Temperatursensorvorrichtung (1000) nach einem der vorangegangenen Ansprüche, wobei die erste Halterung (1310) eine Klemmvorrichtung (1330) umfasst, wobei das zumindest abschnittsweise laterale Umgreifen, Umschließen oder Umranden des ersten Temperatursensors (1100) durch die erste Halterung (1310) dadurch zustande kommt, dass der erste Temperatursensor (1100) durch die Klemmvorrichtung (1330) lösbar gegen die erste Halterung (1310) geklemmt oder gepresst wird oder durch die Klemmvorrichtung (1330) eingeklemmt oder geklammert wird.

9. Temperatursensorvorrichtung (1000) nach einem der vorangegangenen Ansprüche, umfassend mindestens einen weiteren Temperatursensor (1100', 1100"), wobei
- das Anschlussteil (1200) mindestens einen weiteren Durchgangskanal (1203', 1203") aufweist,
- einem jeden weiteren Temperatursensor (1100', 1100") genau einer der weiteren Durchgangskanäle (1203', 1203") zugeordnet ist, sodass die Anzahl der weiteren Durchgangskanäle (1203', 1203") mindestens der Anzahl an weiteren Temperatursensoren (1100', 1100") entspricht,
- ein jeder weiterer Temperatursensor (1100', 1100") durch den jeweiligen, ihm zugeordneten weiteren Durchgangskanal (1203', 1203") hindurchgeführt angeordnet ist und zumindest an der Prozessseite (1202) mittelbar oder unmittelbar in den jeweiligen, ihm zugeordneten weiteren Durchgangskanal (1203', 1203") eingeschweißt oder eingelötet ist, und
- die erste Halterung (1310) einen jeden weiteren Temperatursensor (1100', 1100") im ersten Abstand (L1) vom Anschlussteil (1200) zumindest abschnittsweise lateral umgreift, umschließt oder umrandet.

10. Temperatursensorvorrichtung (1000) nach Anspruch 9, wobei ein jeder weiterer Temperatursensor (1100', 1100") jeweils als mineralisolierte Mantelleitung ausgebildet ist.

11. Temperatursensorvorrichtung (1000) nach einem der vorangegangenen Ansprüche, wobei die Stützstruktur (1300) eine zweite Halterung (1320) umfasst, welche mittelbar oder unmittelbar mit dem Anschlussteil (1200) mechanisch starr verbunden oder verbindbar ist und welche den ersten Temperatursensor (1100) in einem zweiten Abstand (L2) von der ersten Halterung (1310) zumindest abschnittsweise lateral umgreift, umschließt oder umrandet.

12. Temperatursensorvorrichtung (1000) nach Anspruch 11, wobei der zweite Abstand (L2) mindestens einem Durchmesser (D) des ersten Temperatursensors (1100) entspricht, insbesondere mindestens dem Doppelten des Durchmessers (D) des ersten Temperatursensors (1100) entspricht.

13. Temperatursensorvorrichtung (1000) nach einem der Ansprüche 11 bis 12, wobei
- die zweite Halterung (1320) nur mittelbar mit dem Anschlussteil (1200) mechanisch starr verbunden oder verbindbar ist, wobei diese mittelbare Verbindung dadurch zustande kommt, dass die zweite Halterung (1320) mit der ersten Halterung (1310) mittelbar oder unmittelbar mechanisch starr verbunden oder verbindbar ist, oder
- die erste Halterung (1310) nur mittelbar mit dem Anschlussteil (1200) mechanisch starr verbunden oder verbindbar ist, wobei diese mittelbare Verbindung dadurch zustande kommt, dass die erste Halterung (1310) mit der zweiten Halterung (1320) mittelbar oder unmittelbar mechanisch starr verbunden oder verbindbar ist.

14. Temperatursensorvorrichtung (1000) nach einem der Ansprüche 11 bis 13, wobei der erste Temperatursensor (1100) durch das zumindest abschnittsweise laterale Umgreifen, Umschließen oder Umranden durch die zweite Halterung (1320) derart in seiner Auslenkungsfähigkeit beschränkt wird, dass ein Querschnittsmittelpunkt des ersten Temperatursensors (1100) im zweiten Abstand (L2) von der ersten Halterung (1310) stets zumindest im Wesentlichen auf einer gedachten Verlängerung einer Achse (1204) des ersten Durchgangskanals (1203) liegt.

15. Temperatursensorvorrichtung (1000) nach einem der Ansprüche 11 bis 14, wobei die zweite Halterung (1320) eine zweite Halteplatte (1321) mit einem zweiten Halterungskanal (1322) aufweist, wobei der erste Temperatursensor (1100) durch den zweiten Halterungskanal (1322) hindurchgeführt angeordnet ist.

16. Temperatursensorvorrichtung (1000) nach Anspruch 15, wobei der zweite Halterungskanal (1322) einen Durchmesser aufweist, welcher jeweils um 3 Prozent bis 15 Prozent größer als ein Durchmesser (D) des ersten Temperatursensors (1100) ist und/oder
wobei der zweite Halterungskanal (1322) im Radius ein Spiel von 0,1 mm bis 0,5 mm gegenüber einem Radius des ersten Temperatursensors (1100) aufweist.

17. Temperatursensorvorrichtung (1000) nach einem der Ansprüche 15 bis 16, wobei
- die zweite Halterung (1320) eine Verbindungswand (1323) aufweist, welche sich zumindest abschnittsweise lateral an die zweite Halteplatte (1321) anschließt,
- die zweite Halteplatte (1321) mittelbar oder unmittelbar über die Verbindungswand (1323) mit dem Anschlussteil (1200) mechanisch starr verbindbar oder verbunden ist und
- die erste Halterung (1310) zwischen dem Anschlussteil (1200) und der zweiten Halteplatte (1321) angeordnet und zumindest abschnittsweise lateral von der Verbindungswand (1323) umgeben ist.

18. Temperatursensorvorrichtung (1000) nach einem der Ansprüche 11 bis 17, umfassend mindestens einen weiteren Temperatursensor (1100', 1100"), wobei
- das Anschlussteil (1200) mindestens einen weiteren Durchgangskanal (1203', 1203") aufweist,
- einem jeden weiteren Temperatursensor (1100', 1100") genau einer der weiteren Durchgangskanäle (1203', 1203") zugeordnet ist, sodass die Anzahl der weiteren Durchgangskanäle (1203', 1203") mindestens der Anzahl an weiteren Temperatursensoren (1100', 1100") entspricht,
- ein jeder weiterer Temperatursensor (1100', 1100") durch den jeweiligen, ihm zugeordneten weiteren Durchgangskanal (1203', 1203") hindurchgeführt angeordnet ist und zumindest an der Prozessseite (1202) mittelbar oder unmittelbar in den jeweiligen, ihm zugeordneten weiteren Durchgangskanal (1203', 1203") eingeschweißt oder eingelötet ist,
- die erste Halterung (1310) einen jeden weiteren Temperatursensor (1100', 1100") im ersten Abstand (L1) vom Anschlussteil (1200) zumindest abschnittsweise lateral umgreift, umschließt oder umrandet, und
- die zweite Halterung (1320) einen jeden weiteren Temperatursensor (1100', 1100") im zweiten Abstand (L2) von der ersten Halterung (1310) zumindest abschnittsweise lateral umgreift, umschließt oder umrandet.

19. Temperatursensorvorrichtung (1000) nach Anspruch 18, wobei ein jeder weiterer Temperatursensor (1100', 1100") jeweils als mineralisolierte Mantelleitung ausgebildet ist.
